# EUROPEAN PATENT SPECIFICATION

(11) **EP 2 665 299 B1**
(45) Date of publication and mention of the grant of the patent: **26.11.2014**
(21) Application number: 12192947.5
(22) Date of filing: 15.05.2012
(51) Int. Cl.: H04W 8/00, H04W 84/18, H04W 88/06, H04W 76/02

(54) **Beacon management for network assisted device-to-device communication**
Bakenverwaltung zur netzwerkunterstützten Vorrichtung-zu-Vorrichtung-Kommunikation
Gestion de balise pour communication de dispositif à dispositif assistée par réseau

(43) Date of publication of application: 20.11.2013
(62) Divisional of application: 12167974.0
(73) Proprietor: Telefonaktiebolaget L M Ericsson (publ), 164 83 Stockholm (SE)
(72) Inventor: Wilhelmsson, Leif, SE-247 55 DALBY (SE); Lindoff, Bengt, SE-237 35 BJÄRRED (SE); Fodor, Gabor, SE-165 52 HÄSSELBY (SE); Kazmi, Muhammad, SE-167 39 BROMMA (SE)
(74) Representative: Ström & Gulliksson AB

(56) References cited:
- WO-A1-2011/085073
- US-A1- 2011 258 313
- GÃ BOR FODOR ET AL: "Design aspects of network assisted device-to-device communications", IEEE COMMUNICATIONS MAGAZINE, IEEE SERVICE CENTER, PISCATAWAY, US, vol. 50, no. 3, 1 March 2012 (2012-03-01), pages 170-177, XP011429640, ISSN: 0163-6804, DOI: 10.1109/MCOM.2012.6163598
- INTEL: "Operator Managed and Operator Assisted D2D", 3GPP DRAFT; S1-120063-MANAGED OR ASSISTED D2D, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG1, no. Kyoto, Japan; 20120213 - 20120217, 6 February 2012 (2012-02-06), XP050574728,
- DOPPLER K ET AL: "Device-to-device communication as an underlay to LTE-advanced networks", IEEE COMMUNICATIONS MAGAZINE, IEEE SERVICE CENTER, PISCATAWAY, US, vol. 47, no. 12, 1 December 2009 (2009-12-01), pages 42-49, XP011285852, ISSN: 0163-6804, DOI: 10.1109/MCOM.2009.5350367

## Description

### Technical Field

The present invention relates generally to the field of network assisted device to device communication. More particularly, it relates to beacon management of such communication.

### Background

Device-to-Device (D2D) communication refers to direct communication between devices. In D2D communication data to be transmitted from a first device to a second device is typically not relayed via any cellular network. Some examples of D2D communication of the prior art are Bluetooth communication, FlashlinQ communication, WLAN (e.g. IEEE 802.11) communication (e.g. WIFI direct).

Device-to-device communication may be applicable in various scenarios. One scenario is when a cellular radio access network is present, and able to set up a cellular connection between two devices. D2D communication may be a complement to the cellular communication in such scenarios.

There may be situations when D2D communication may provide better performance (better signal quality, higher bit rate, lower latency, etc) than cellular communication. This may be due to proximity between the devices and/or specific signaling gain of the D2D protocol (e.g. hop gain).

In some situations, the network may have constraints (e.g. due to being heavily loaded) resulting in that a service cannot be provided at all using a network connection. Then, D2D communication would be an alternative.

There may also be situations when D2D communication may be preferred by the user of a device (e.g. due to billing costs).

D2D communication may improve spectrum efficiency and reduce the network load for the cellular network, since the D2D connection typically uses another spectrum range (e.g. an unlicensed spectrum) than the cellular network (typically licensed spectrum). Furthermore, since cellular communication uses an uplink-downlink pair for each of the two devices while a D2D connection would only use one link pair, spectrum efficiency is improved even if the D2D connection would use cellular spectrum resources. This would be true even for network assisted D2D communication where most of the data would be transmitted over the D2D connection and only a small amount of information is to be transmitted over the network link.

In D2D communication scenarios, it is envisioned that there may be a large amount of D2D capable devices in vicinity to one another, e.g. in the area covered by a particular network node or in a smaller region. This allows for many possibilities for D2D link establishment, but the situation may also cause quite some interference generated by the D2D signaling, e.g. peer discovery. Optimizing e.g. link performance and system performance in such scenarios is a complex task.

D2D communication may be ad hoc or may be network assisted. For example, a cellular network may assist a D2D connection by establishing security of the D2D link and /or partly or fully controlling the setup of the D2D connection (e.g. device/peer discovery and resource allocation). A cellular network may also assist D2D communication by controlling the interference environment. For example, if using licensed operator's spectrum for the D2D communication, higher reliability can be provided than when operating in unlicensed spectrum. To assist the D2D connection, the network may also provide synchronization and/or partial or full Radio Resource Management (RRM).

Device/peer discovery in D2D communication is typically based on the devices transmitting (e.g. broadcasting) and/or detecting beacon signals respectively. In network assisted D2D device discovery, the network may assist the devices by allocating beacon resources and providing information that the devices can use to construct and detect the beacon signals used for the discovery.

The article "Design aspects of network assisted device-to-device communications" by Fodor, Dahlman, Mildh, Parkvall, Reider, Mikl6s and Turányi, pages 170-177 in IEEE Communications Magazine, March 2012 discloses that the network can mediate in the discovery process by recognizing D2D candidates and coordinating the time and frequency allocations for sending/scanning for beacons.

US 6,574,266 B1 discloses a base station transmitting a beacon signal including information about the identity and system clock of the base station. The base terminal exchanges information between remote terminals that enables the master terminal to establish a direct communication session with a slave terminal. In order to enable a fast setup of the connection between the terminals, the identity and clock of the master terminal is relayed by the master base station to the other terminal or terminals.

US 2011/258313 A1 concerns network-assisted peer discovery to enable Peer-to-Peer communication, wherein a device registers with a network entity so that the presence of the device and possibly other information about the device can be made known to the network entity. The device sends a request to the network entity during or after registration. The request includes information used to match the device with other devices. A directory agent matches requests received from all devices, determines a match between the device and at least one other device, and sends a notification to perform peer discovery.

Typically, a beacon signal for a device could be based on the identity of the device, or could be randomly drawn from a set of beacon signals. This applies both if the network allocates the beacons and if the beacons are not provided by the network.

The beacon signals are then transmitted by the respective (master) devices (typically at certain time intervals). The listening (slave) devices then need to scan for beacons. It should be noted that a device may take the role of master only, slave only or a combination of both roles. When a beacon is detected, the corresponding slave typically sends an acknowledgement to the corresponding master, and a D2D connection can be initiated.

Having the beacon signaling allocated and coordinated by a network (as in the IEEE Communications Magazine article cited above) reduces the beacon collision risk. Furthermore, letting the slaves have beacon information of the master(s) (as in both of the disclosures cited above) might improve scanning performance (e.g. shorter time to discovery, lower power consumption).

However, the acknowledgements transmitted in an uncoordinated manner (before the D2D connection is set up) suffers a collision risk and/or may increase the interference level in the system.

Furthermore, allocation of beacons in the network and efficient transmission of the allocation information to the devices becomes cumbersome when the possible number of devices to be considered for device-to-device communication increases.

Therefore, there is a need for alternative approaches to network assisted device-to-device connection setup. There is a need for alternative approaches to beacon resource allocation by a network, as well as transmission of information relating to the allocated beacon resources to devices. There is also a need for alternative approaches to beacon acknowledgement transmission.

### Summary

It should be emphasized that the term "comprises/comprising" when used in this specification is taken to specify the presence of stated features, integers, steps, or components, but does not preclude the presence or addition of one or more other features, integers, steps, components, or groups thereof.

It is an object of the invention to obviate at least some of the above disadvantages and to provide alternative approaches to network assisted device-to-device connection setup. This is achieved by a method of a first wireless communication device adapted to perform device-to-device communication according to independent claim 1 and a method of a network node adapted to provide assistance of device-to-device communication according to independent claim 10.

This is furthermore achieved by an arrangement of a first wireless communication device adapted to perform device-to-device communication according to independent claim 17, an arrangement of a network node adapted to provide assistance of device-to-device communication according to independent claim 24 and a computer program product according to claim 16.

Advantageous embodiments are described in the dependent claims.

Yet a further advantage of some embodiments is that the radio conditions applicable for D2D communication may be estimated in an efficient way.

### Brief Description of the Drawings

Further objects, features and advantages will appear from the following detailed description of embodiments, with reference being made to the accompanying drawings, in which:
Figs. 1a and 1b are schematic drawings illustrating devices in a network according to some embodiments;
Fig. 2 is a combined flowchart and signaling diagram illustrating example methods and signaling according to some embodiments;
Fig. 3 is a flowchart illustrating an example method according to some embodiments;
Fig. 4 is a flowchart illustrating an example method according to some embodiments;
Fig. 5 is a block diagram illustrating an example arrangement according to some embodiments;
Fig. 6 is a block diagram illustrating an example arrangement according to some embodiments; and
Fig. 7 is a schematic drawing illustrating a computer readable medium according to some embodiments.

### Detailed Description

It is noted that D2D protocols/communication/connection when used herein relates to any known or future suitable D2D application. Examples include, but are not limited to, Bluetooth, WLAN (WIFI direct), FlashlinQ, and D2D using cellular spectrum. For example, a network assisted D2D communication may use uplink and/or downlink resources of the cellular spectrum as allocated by the network node. The D2D communication may be TDD or FDD. The network node may impose restrictions on the D2D communication (particularly when cellular and/or licensed spectrum is used), e.g. power control such as a maximum allowed transmission power and/or power control commands.

Similarly, it is noted that cellular protocols/communication/connection when used herein relates to any known or future suitable cellular application. Examples include, but are not limited to, 3GPP cellular standards (e.g. GSM, WCDMA, TD-SCDMA, LTE), WLAN, and even device-to-device networks. A network node may, for example, comprise a base station, a NodeB, an eNodeB, or a WLAN access point.

A network node may be any suitable part of a network (e.g. a serving or controlling node); e.g. a cellular base station, a relay node, a wireless access point, or a core network node.

A beacon or beacon signal may be a signal broadcast from a device (network node or wireless communication device) making it possible for other devices to note the presence of the device. It may have fixed or variable transmission power. It may typically be used for peer discovery in D2D communication scenarios, but may also be applicable in other scenarios. In some applications, a beacon may be referred to as a type of reference signal or synchronization signal.

The beacon transmission may take place in an un-licensed spectrum or in a licensed spectrum. Similarly the D2D communication may take place in an un-licensed spectrum or in a licensed spectrum, not necessarily depending on which spectrum was used for the beacon transmission.

In the following, embodiments will be described where alternative approaches to network assisted device-to-device connection setup are taken.

For example, network assisted D2D link estimation may be provided according to some approaches. This may be beneficial for centralized interference coordination, for example. Centralized (i.e. network assisted) interference coordination of D2D communication typically requires that the network node (and possibly also the devices) is at least partly aware of the applicable interference situation (or more generally the applicable radio conditions). Acquiring this awareness is a complex task that may be facilitated by some embodiments presented herein.

Some embodiments use a short and therefore efficient local device identity (LDID) as a bearer of beacon information. This local device identity is allocated in a network node to a corresponding global device identity (GDID) conveyed by a device to the network node.

Each GDID may be associated with a device per se or with one (possibly out of several) subscription used by the device. Even further, a device (or subscription) may be associated with different GDIDs for different services (offered or requested by the device), for example. One example is to use IMSI as a GDID. An example of several GDIDs for a single device could be a vending machine selling several beverages, each having its own GDID. A GDID could be a combination of, for example, a subscription specific and service specific ID. The GDIDs are typically associated with the devices independently of the location or current tracking area or cell association of that device.

The set of possible LDIDs kept at a network node may be designed to minimize a mutual cross correlation or maximize a signal distance between the corresponding beacons. The subset of LDIDs used at a particular moment may also be chosen with such conditions in mind. The size of a subset of LDIDs used at a particular moment may, for example, depend on a current number of D2D capable devices in a cell or on a current number of D2D active devices in the cell. Thus, the number and/or the characteristics of the local device identities used by the network node for D2D communication in a cell may be determined by using one or more criteria. Example criteria include, but are not limited to, a current number of D2D capable devices operating in the cell, a correlation characteristic of the LDIDs, a total number of available LDIDs, LDIDs used by neighboring network nodes, etc.

Information indicative of the allocated local device identity is transmitted to the corresponding device and may be used to determine how to transmit a beacon signal. Information indicative of the allocated local device identity is also transmitted to other devices and may be used to determine how to receive or detect a beacon signal.

The mapping between global and local device identities may be updated as required. For example, an update may be needed when a device enters or leaves a cell. An update may, for example, be beneficial to maximize the signal distance between the used beacons.

In some embodiments, a network node allocates beacon resources to each D2D capable (master) device. Information regarding the allocation is transmitted to the corresponding device and other D2D capable (slave) devices. The corresponding device uses the information to transmit its beacon signal. The other devices use the information to monitor relevant beacon resources to possibly detect a beacon signal.

The other devices transmit respective beacon measurement reports to the network. The reports may be transmitted at predetermined times/intervals (regardless of whether a beacon has been detected or not) and/or as a consequence of beacon detection.

The reports may be useful for the network node to assist in setting up a connection between two corresponding devices. For example, the reports may be used to determine whether to use a D2D connection or a cellular connection. If a D2D connection is to be used, information of the report may be used in the setup procedure.

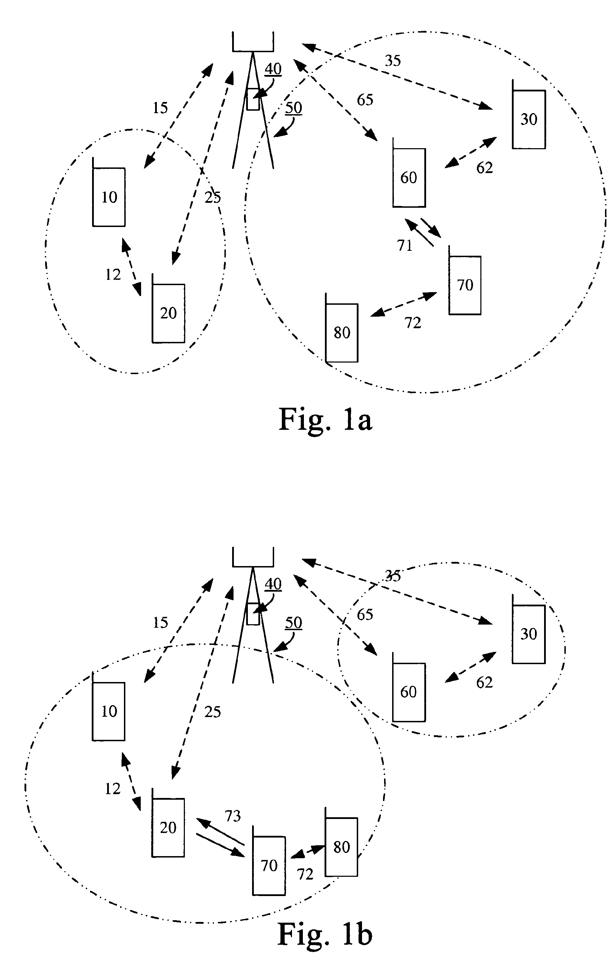

Figure 1a is a schematic drawing illustrating devices 10, 20, 30, 60, 70, 80 in a network comprising a base station site 50 with a base station (network node) 40. The network node 40 is connected to each of the devices 10, 20, 30, 60, 70, 80 via respective wireless links 15, 25, 35, 65 (all links not shown in the figure). The devices have D2D capability. In addition, there may be devices (not shown) which are not D2D capable. Since the devices 10 and 20 are geographically close to each other the radio conditions for direct communication between them are very good in this example. Hence, the network node has assisted (via links 15 and 25) them to set up a D2D wireless link 12. Similarly, devices 30 and 60 are connected via D2D link 62 and devices 70 and 80 are connected via D2D link 72. Also shown is a potential interference situation, illustrated by 71, between devices 60 and 70. Devices 10 and 20 may be seen as one group where the devices are relevant to each other (in this case for a prospect D2D connection via link 12), and devices 30, 60, 70 and 80 may be seen as one other group where the devices are relevant to each other (in this case for prospect D2D connections via links 62 and/or 72, but also in terms of the interference 71).

Figure 1b is a schematic drawing illustrating devices 10, 20, 30, 60, 70, 80 in a network comprising a base station site 50 with a base station (network node) 40. Figure 1b illustrates a situation at a later moment in time compared to Figure 1a. In Figure 1b, the device 70 has moved and is now in another location. The devices 70 and 80 are still connected via D2D link 72. However, device 70 is now far from device 60 and the interference situation experienced in Figure 1a has changed. Instead, there is now a potential interference situation, illustrated by 73, between devices 20 and 70. Thus, devices 10, 20, 70 and 80 may now be seen as one group where the devices are relevant to each other, and devices 30 and 60 may be seen as one other group where the devices are relevant to each other.

Before the network node can allocate resources for D2D communication, it is beneficial for the network node to know which devices can hear each other (e.g. peer discovery) and the condition of their mutual links (e.g. radio condition, interference, etc). Such information should, preferably, be achieved in a structured and efficient manner. It may also be beneficial if each (or some) of the devices had access to at least part of this knowledge.

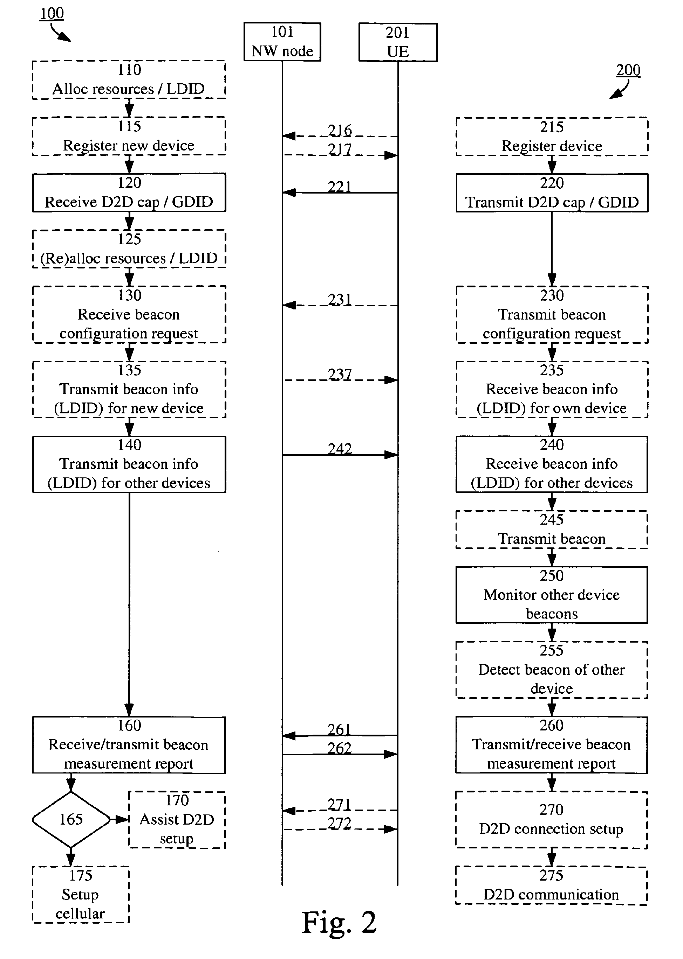

Figure 2 is a combined flowchart and signaling diagram illustrating example methods performed by a network node (e.g. the network node 40 of Figure 1a) and a D2D capable device (e.g. one of the devices 10 and 20 of Figure 1a) respectively and signaling between them according to some embodiments.

A method 100 is performed by a network node 101 and a method 200 is performed by a device (user equipment - UE) 201.

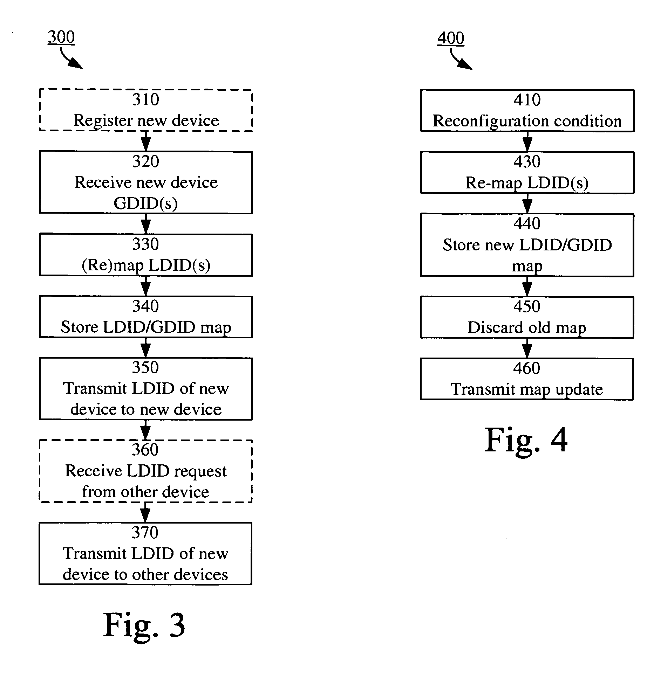

If there are already other D2D capable devices registered to the network node, the network node has allocated beacon resources to them in 110. The allocation of beacon resources may comprise allocation of a local device identity (LDID) as will be described later in connection to Figure 3. The local device identity may be representative (e.g. via a look-up table or via a shift register initiated with the LDID) of beacon resources (e.g. a time and/or frequency, a signal shape, a beacon signature, a transmission pattern, a transmission power, etc.). In some embodiments, a Primary/Secondary Synchronization Signal (PSS/SSS) may be used as a beacon signal. Other examples include Zadoff-Chu sequences and M-sequences. In some embodiments, beacons may be based on, for example, orthogonal codes, pseudo-noise sequences, or BCH codes.

The allocation (and/or re-allocation) of 110 and 125 (later described) may be performed in a resource efficient way.

In some embodiments, it may be beneficial to minimize the total number of beacon transmissions. For example, beacon transmission may be allowed only by one device at a time and the other devices are asked to listen. Thus, beacon transmission allocation may first allow a first device to transmit, then a second device, then a third device, and so on.

This approach may be taken towards all D2D capable devices registered at the network node, or towards a group of D2D capable devices registered at the network node (e.g. a group of devices being close to each other, in a same geographical region, or otherwise likely to be able to set up D2D communication). In the latter case, beacon transmission allocation may, thus, first allow a first device of a first group and a first device of a second group to transmit simultaneously, then a second device of the respective groups, and so on. In such an example, the devices of the first group are asked to listen only for the beacons transmitted in relation to the first group and similarly for the devices of the second group.

This approach provides the advantage of having a structured beacon transmission scheme, which minimizes the number of beacons transmitted in the cell/region. The risk of interference between beacons is also minimized as well as the interference generation by beacons towards other signaling of the cell. This is achieved while not compromising the amount of information that it is possible to extract via the beacon process.

In some embodiments, it may be beneficial to minimize the total number of beacon transmissions and/or the total amount of beacon monitoring. For such a purpose it is noted that the conditions of a signal path from a first device to a second device is probably equal or at least similar to the conditions of the signal path in the opposite direction (at least if a similar frequency band is used for communication in both directions, e.g. TDD, but also possibly feasible for FDD since the average link attenuation is typically highly correlated also for FDD). Thus, to detect D2D communication prospects and/or to estimate signaling conditions of a prospect D2D link, it may be sufficient to let only one of the two devices transmit a beacon and let the other listen.

Following this principle, the allocation of beacon resources (to all D2D capable devices registered at the network node, or towards a group of devices) may be adjusted by not activating a device for listening purposes once it has transmitted its allocated beacon. Thus, beacon transmission allocation may first allow a first device to transmit and ask the other devices to listen, then a second device is allowed to transmit and the other devices (except the first device) are asked to listen, then a third device is allowed to transmit and the other devices (except the first and second device) are asked to listen, and so on.

This approach has the further advantage of minimizing the average beacon listening time of a device and, hence, power consumption.

In some embodiments, a beacon transmission resource may be allocated only to one or more devices that have changed its location (compare with device 70 of Figures 1a and 1b). Such a location change may, for example comprise entering of a cell, but it may also or alternatively comprise movement of the device within a cell (e.g. detected by positioning equipment of the device such as a GPS). Thus, when a device has moved it may be allocated a beacon transmission resource by the network node, who may also ask the other devices to listen accordingly. The network may ask all D2D capable devices in a cell to listen. Alternatively, it may ask only the devices of a group as described above to listen. The group may be a group that the device belonged to according to a previous location and/or a group that the device belongs to according to a current location. For example, only the group the device previously belonged to may be asked to listen if a small movement is detected, while a new group (or all devices) may be asked to listen if a large movement or cell change is detected. In some embodiments devices that have not moved are not allocated any beacon transmission resources.

A location change of a device may be detected autonomously by the network node (e.g. for a cell change) or may be detected by the network node via signaling from the device to the network node (e.g. a GPS of the device detecting movement within a cell). Another way of detecting a possible location change may comprise evaluating whether the corresponding radio links have changed.

In 215, a new device (device 201) commences registration to the network node 101, e.g. by transmission of a registration request message 216, and the network node 101 registers the new device 201 in 115, e.g. by transmission of a registration response message 217. The registering of the new device are presented as optional in this example, since the subsequent actions may take place even if the new device is already registered to the network node.

In 220, the device 201 transmits a D2D capability indication (e.g. a D2D access request) to the network node 101 who receives the indication in 120. The D2D capability indication may be transmitted via the message 221 as illustrated in Figure 2. Alternatively 220 and 120 may be part of the registration procedure 215, 115, in which case the D2D capability indication may be comprised in the registration request message 216. The D2D capability indication may comprise one or more global device identities associated with the device 201.

In 125, the network node 101 allocates beacon resources to the device 201 in a similar way as was described in relation to 110. If applicable, the network node 101 may also re-allocate already allocated resources of other devices based on the new conditions in 125.

A beacon configuration request message 231 may optionally be transmitted in 230 by the device 201 and received in 130 by the network node 101.

Either as a response to a beacon configuration request message 231 or autonomously, the network node 101 may transmit information regarding the allocated beacon resources for the device 201 in 135 using message 237. Similarly, either as a response to the beacon configuration request message 231 or autonomously, the network node 101 transmits information regarding the allocated beacon resources for other devices in 140 using message 242.

In some embodiments, the network node may receive information regarding the allocated beacon resources for neighboring network nodes.

In such embodiments, the transmission of beacon information in 135 and 140 may further comprise transmitting information regarding the allocated beacon resources for devices in the cell of network node 101 to neighboring network nodes using either one or more of the messages 237 and 242 or a separate message (not shown).

The transmission of beacon information in 140 may even further comprise transmitting information regarding the allocated beacon resources for devices in other, neighboring, cells using message 242.

The transmissions in 135 and 140 may be joint transmissions to the device 201 and other devices (e.g. broadcasting the information or using a shared channel). Alternatively or additionally, the transmissions in 135 and 140 may comprise separate transmissions to the device 201 and other devices respectively (e.g. using dedicated signaling). For example, the transmission may be in the form of a dedicated data packet message (e.g. on the Application layer), a dedicated Radio Resource Control (RRC) message, or a dedicated MAC layer message.

The information regarding the allocated beacon resources of the transmissions 237, 242 may e.g. comprise a local device identity, a beacon signature, a beacon signal shape, a beacon signature, a beacon signal pattern (e.g. a pattern in time and/or frequency where the beacon signal shape/signature should be used and/or a definition of how the beacon signal shape/signature should be repeated), and/or a beacon transmission power (minimum/actual/maximum). The beacon transmission power could comprise one or more of a maximum allowed transmission power, a minimum allowed transmission power, an allowed transmission power range, and a transmission power variation scheme (e.g. with different transmission power for different time/frequency resources).

The beacon signature sequence could be of any suitable type, e.g. an orthogonal code, a pseudo noise sequence, a BCH code, etc. The beacon signature sequence could be used as the LDID. Alternatively, the LDID may be mapped to a signature sequence according to a predefined rule (e.g. based on standardized protocols, information previously received from the network, a look-up table, etc). Yet alternatively, the LDID may be used to generate a signature sequence (e.g. by defining a coding or filter parameters to be used for generating the signature).

In some embodiments, the actions in 125 may be part of the registration procedure 215, 115 and part (e.g. LDID) or all of the information of 237 and 242 may be included in a registration response message 217.

The transmission of allocation information regarding other devices in 140 may be based on which devices have a good prospect of D2D communication with the new device 201 (e.g. have similar D2D capabilities, are in a geographical vicinity, have good radio conditions of a prospect D2D link, etc). Such information may be stored for each device together with the beacon allocation information in the network node (or any other suitable entity of the network).

In 235, the device 201 receives the information regarding its own allocated beacon resources, and uses the information to transmit its beacon in 245. The beacon transmission may be done using any suitable known or future method. For example, a beacon signature may be mapped to a modulation (according to an applicable standard) and transmitted. The transmission pattern may be the time/frequency resources to be used for transmission of the signature. Such resources could be a single instance or according to a repetition pattern. The pattern could be regular or irregular in time domain, and could also be shifted in frequency in a regular or irregular manner. The frequency shift could be in between two transmission instances of the pattern, but could also be a frequency shift of resources in a specific beacon transmission session (e.g. similarly to transmission in PUCCH, where a first frequency allocation (e.g. end of available bandwidth) is applied in a Slot-1 of a PUCCH transmission of 3GPP Rel 10, while a second, different, frequency allocation (e.g. start of available bandwidth) is applied in a Slot-2 of the PUCCH). Using an example applicable to UMTS LTE, a time shift could be in between slots in a sub frame, i.e., similar to the PUCCH transmission. Such a shift between slots in a sub frame may be comprised in the information of the configuration message 237, but may also be pre-defined in the standard. The transmission pattern may further include a start time and a stop time for the pattern. The beacon transmission may, for example, be stopped if a stop condition is fulfilled, if an end of transmission pattern is reached, or if a timer is timed out.

In 240, the device 201 receives information regarding allocated beacon resources of other devices. This information is used in 250 to monitor only relevant beacon resources. In some embodiments, the device only enables its receiver at time intervals where beacon signals are expected according to the received beacon configuration message.

It is noted that one or more of the actions described as optional in this example may be non-optional in other examples. Likewise, one or more of the actions described as non-optional in this example may be optional in other examples.

In this example, 135, 235, 245 are described as optional. They only apply to devices acting as masters.

As mentioned earlier, master devices transmit beacon signals and slave devices scan for beacons. It should be noted that a device may take the role of master only, slave only or a combination of both roles.

Depending on the situation (e.g. if a beacon is sent, radio conditions, etc.), a beacon may or may not be detected in 255. The detection process may comprise any suitable known of future algorithms. For example, the detection could comprise one or more of signal detection, energy detection, correlation to one or more known sequences, and decoding of a coded message. The discovery procedure 250, 255 may be terminated once one beacon signal or a subset of beacon signals have been discovered (each discovered beacon signal typically associated with a separate LDID and/or a separate device). It could also be terminated when a particular (predetermined or dynamic) time has elapsed, e.g. when a timer associated with the transmission pattern information or discovery session has timed out.

A beacon measurement report (or beacon detection report) 261 is transmitted by the device 201 in 260. It is received by the network node 101 in 160. This relates to the situation when the device is a beacon monitoring device (slave). The report may be transmitted at predetermined times/intervals (regardless of whether a beacon has been detected or not) and/or as a consequence of beacon detection in 255.

In some embodiments, a beacon measurement report 262 is transmitted by the network in 160 and received by the device in 260. This relates to the situation when the device is a beacon transmitting device (master).

Thus, the network node 101, may receive one or more beacon measurement reports in 160 and transmit (at least part of) the information therein to one or more device as illustrated by 262. For example, information may be transmitted to each device regarding which other devices are prospects for D2D connection based on the information in the beacon measurement reports. The beacon measurement reports to and from the network node, 261 and 262 respectively, may have the same or different format.

The beacon measurement report 261 may comprise information relating to how many beacons (if any) has been detected and particulars of the detected beacons (e.g. one or more of beacon signature, corresponding LDID, a cell identity (i.e. an indication of which cell the beacon transmitting device belongs to), received power of the beacon, RSSI, RSRP, RSRQ, an interference estimate, signal-to-noise ratio (SNR), signal-to-interference ratio (SIR), signal-to-noise and interference ratio (SINR), estimated path loss and/or radio channel between the corresponding devices, etc.). Other particulars of detected signals may also be reported. For instance, the timing (may be within a cyclic prefix for an OFDM system) of the detected signal in relation to another timing (e.g. DL or UL timing for the connection to the network node) may be reported. The number of detection trials prior to actual detection may also be reported. Another example of report content may be an indication regarding at which time/frequency resource the beacon signal was detected.

The beacon measurement report 262 may comprise the same or similar information as the report 261. Additionally or alternatively, the beacon measurement report 262 to a particular device may comprise information (e.g. identities, radio condition estimation, etc.) regarding which devices have indicated that they have reliably detected the beacon of the particular device. Yet additionally or alternatively, the beacon measurement report 262 to a particular device may comprise information regarding which devices (of any) may cause interference to the particular device.

The beacon measurement report may be used by the network node to assist 165, 170, 175 in the setup of a connection between the device 201 and another particular device. For example, the network node may relay (at least part of) the information to the relevant devices to assist the device in setting up a D2D connection and/or to decide whether or not to set up a D2D connection at all.

In another example, the report may be used to determine in 165 whether to use cellular connection or D2D connection (or whether to set up a connection at all). A D2D connection may be chosen if the device 201 has detected the beacon of the particular device and a cellular connection may be chosen if the beacon of the particular device was not detected. Other conditions may also apply, for example, the radio propagation conditions on a prospective D2D link, radio propagation conditions on a link between the network node and the device 201 (and/or on a link between the network node and one or more other devices, e.g. another device of a prospect D2D communication), the current traffic load and/or capacity of the network node, etc. A D2D connection may, for example, be chosen if the current traffic load of the cell is high and/or if the respective links between the network and the devices of a prospect D2D communication have bad radio conditions while a prospect D2D link between the devices have good radio conditions. In the embodiments where beacons of neighboring cells are also included in the scanning process and in the reporting to network, such information may be used to determine whether or not to handover a device (or more generally, perform a cell change for the device) to a neighboring cell (or request a handover from a neighboring cell) before initiating a D2D connection setup.

If a cellular connection is chosen, the network node sets it up in 175. If a D2D connection is chosen, the network node may assist in the setup in 170 and 270. For example, the network node may determine which type of D2D connection to use (unlicensed or licensed, protocol applicable, etc.), allocate resources for the D2D connection (e.g. spectrum, time, frequency), provide power control (e.g. set initial transmission power based on a received beacon signal power). This assistance may utilize signaling 271, 272 between the network node and the device 201 (and between the network node and the other particular device). For example, such signaling may render unnecessary sending an acknowledgement message directly from the device 201 to the particular device when its beacon has been detected.

When the D2D connection has been set up the two devices communicate directly with each other according to the D2D communication protocol in 275.

In the example of Figure 2, the search/monitoring/detection 250, 255 and the reporting 260 have been described as separate actions. It is noted that they may be performed in parallel or iteratively according to some embodiments. For example, a detected beacon may be reported as soon as it is detected, while a search for other beacons is still ongoing. In some embodiments, a timer associated with the end of the beacon reception pattern controls when the report should be transmitted. The reporting may be event triggered (e.g. when a detection is made or according to a timer) or periodic. A periodic report may include information of all beacons detected since the previous report. A report could include an empty set (e.g. if no beacons have been detected when the report is due), or could be omitted when there is nothing to report.

Furthermore, the (optional) beacon transmission 245 and the beacon scanning and reporting 250, 255, 260 have been described as separate actions. It is noted that they may be performed another order, in parallel (interleaved), or iteratively according to some embodiments. For instance, the device may switch back and forth between beacon transmission and beacon scanning/reception, or may have the capability to transmit its own beacon and scan for other beacons simultaneously.

As mentioned above, a network node may (according to some embodiments) obtain from one or more neighboring network nodes, information related to the beacon resources allocated by the neighboring network nodes to the D2D capable devices under their control for D2D operation or communication. The information may also indicate the beacon resources reserved by these neighboring network nodes for D2D capable devices. More specifically the information retrieved from the neighboring network nodes may comprise the local device identities assigned to the D2D capable devices and/or reserved for the D2D communication by these neighboring network nodes.

The information may also contain additional information such as the duration (e.g. T0) when the local device identities are assigned to the D2D capable devices. The information related to duration may be associated with each beacon resource or with a group of beacon resources or may be common for all beacon resources. The duration may be expressed in terms of the starting reference time (e.g. in terms of system frame number (SFN) in a neighboring cell) when the beacon resources are assigned to the D2D capable devices, duration from the starting reference time and/or end of the duration (e.g. in terms of SFN of a neighbor cell).

The network node may transmit all or part of the received information (related to the beacon resources and/or corresponding LDIDs from the neighboring network nodes) to the D2D capable devices operating under its control. The network node may also inform its D2D capable devices that the transmitted information corresponds to beacon resources used and/or reserved for D2D capable devices by one or more neighboring network nodes.

The D2D capable devices may be requested by the network node to identify or detect (or perform measurement(s) on an identified beacon signal of) any possible D2D capable device using any of the neighboring beacon resources and inform the network node about the identified D2D capable devices. The D2D capable devices may be requested to perform signal measurements (e.g. signal strength, path loss, signal quality, etc) on the detected neighboring beacon resources and perform a radio operation task. Examples of radio operation task are selecting or re-selecting a second wireless device for D2D communication, and/or reporting the measurement results to the network node. The selecting or re-selecting of a second wireless device for D2D communication may be based on a pre-defined rule and/or a combination of pre-defined rule and network signaled parameters (e.g. signal threshold).

The report received by the network node may be used for one or more network operational tasks. Some examples of network operational tasks include, but are not limited to, performing a cell change of a D2D capable device to one of the neighboring nodes, requesting a cell change of a D2D capable device from one of the neighboring nodes, planning and assignment of beacon resources to D2D capable devices, and forwarding of partial or full report to neighboring nodes.

For example, a cell change may be performed if a D2D capable intends to establish a D2D link with a D2D capable device operating under a neighboring network node. Examples of cell changes (or cell switches) include handover, RRC connection release with redirection, RRC connection re-establishment, cell reselection, PCell change in carrier aggregation or multi-carrier operation, etc.

Examples of when forwarding of partial or full report to neighboring nodes may be beneficial include the scenario when the neighboring node is one of a self organizing node (SON), a network monitoring node, an OSS (operation support system) node, an O&M (operation and maintenance) node, a minimization of drive test (MDT) node, etc. These nodes may further use the results for improving network operation by tuning parameters such as assignment and distribution of beacon resources in the network.

However, all D2D capable devices may not be capable of identifying, measuring, and reporting beacon resources of neighboring network nodes. For example, the device may lack the required processing and memory resources.

Thus, in some embodiments, the D2D capable device may report its capability regarding neighboring beacon resources to the network node. The reported capability information may also comprise additional information. Examples of additional information include, but are not limited to, a maximum number (total or per neighboring network node) of neighboring beacon resources on which the device can do measurements.

For example, the device may send the capability information to the network node by proactive reporting without receiving any explicit request from the network node, or by reporting upon receiving an explicit request from the network node. The explicit request may be sent to by the network node at any suitable time or occasion. For example, the request may be sent to the device during initial setup or after a cell change. For proactive reporting, the device may, for example, report its capability during an initial setup and/or a call setup (e.g. when establishing the RRC connection) and/or a cell change.

The network node may use the received capability information for various network operational tasks.

According to one example, the capability information may be forwarded to a device in D2D communication mode and/or to another network node, e.g., a radio network node, a core network node, or a positioning node. The forwarded information may be useful, for example, after a cell change (so that the device may not be required to signal its capability again after a cell change).

The network may also use the capability information to decide whether to request a particular D2D capable device to identify and report the measurements on neighboring network node beacon resources or not. The network node may also use the received capability information to select one or more configuration parameters used in the measurement configuration information element sent to the D2D capable device for measuring on the neighboring network node beacon resources. For example, the network node may (based on the received capability information) select a maximum number of neighboring network node beacon resources to be sent to the D2D capable device for performing such measurements.

Figure 3 is a flowchart illustrating an example method 300 of a network node (e.g. the network node 40 of Figure 1a and/or 101 of Figure 2) according to some embodiments. The method 300 may be combined with the method 100.

In 310 a new device is registered to the network node, and one or more global device identities (GDID) are received from the new device in 320. The reception of the GDID of 320 may be comprised in the registration procedure 310 according to some embodiments. Each GDID may be associated with the device per se or with one (possibly out of several) subscription used by the device. Even further, a device (or subscription) may be associated with different GDIDs for different services (offered or requested by the device), for example. One example is to use IMSI as a GDID. An example of several GDIDs for a single device could be a vending machine selling several beverages, each having its own GDID. A GDID could be a combination of, for example, a subscription specific and service specific ID. The GDIDs are typically associated with the devices independently of the location or current tracking area or cell association of that device.

The network node (or any other suitable part of the network) maps the received GDID(s) to one or more local device identities (LDID) in 330. If required a re-map of already allocated LDIDs may also take place here as will be described further in connection to Figure 4. The LDID is typically substantially shorter than the GDID, and the set of possible LDIDs is substantially smaller than the set of GDIDs. For instance, the number of LDIDs could be in the range of 10,000 to 1 million while the number of GDIDs could be in the range of 10 billion to 1,000 billion. This is made possible by the particular LDIDs being applicable only within a limited geographical area, e.g. the coverage area of a base station or access point.

The mapping of each GDID to a LDID can be one-to-one, one-to-many or many-to-one. Typically the mapping is confined so that in a one-to-many or many-to-one map all identities are associated with the same device. In some embodiments, the device is allocated one LDID, i.e. all GDIDs associated with the device are mapped to one LDID. In some embodiments, a subset of the GDIDs of a device is associated with one LDID and another subset of the GDIDs of a device is associated with another LDID. Hence, the device is allocated several LDIDs in such embodiments. An example where this approach may be useful is when the device supports different services that could be subject of D2D communication, and each service gets its own LDID. IN some embodiments, a device may only have one GDID and several LDIDs are allocated, e.g. depending on requested service.

The mapping is stored in the network node (or any other suitable part of the network) as shown by 340.

In some embodiments, one or more entries in the map may be tagged with information regarding link qualities associated with the device. The link quality information may be based on signal strength measurements for the connection between the relevant device (associated with the map entry) and the network node, or on link quality estimates for a connection between the relevant device and other devices (e.g. based on earlier detected beacons).

Information indicative of at least the LDIDs of the new device is transmitted to the new device (in 350) and to one or more other devices (in 370). These transmissions may comprise transmission of the full map, a partial map (e.g. the updated parts), or only the LDID of the new device. Similarly to the beacon information described in relation to Figure 2, the information indicative of the LDID may be transmitted as to several devices simultaneously (e.g. broadcast or shared signaling) or to each device separately (e.g. dedicated signaling). The LDID information transmission may be at a predetermined time, at regular time intervals (e.g. periodically), or as a response to the LDID request received from a device as illustrated in 360. The general principles, alternatives and examples described in connection with step 140 of Figure 2 may apply also to 370.

The transmission of full or partial map to other devices in 370 may be to all (or subset of) D2D capable devices registered at the network node. It could for example be a subset based on which devices have a good prospect of D2D communication with each other (e.g. have similar D2D capabilities, are in a geographical vicinity, have good radio conditions of a prospect D2D link, etc), and/or which devices relate to a similar service. Different parts of the map may be transmitted to different devices.

Figure 4 is a flowchart illustrating an example method 400 of a network node (e.g. the network node 40 of Figure 1a and/or 101 of Figure 2) according to some embodiments. The method 400 may be combined with the method 300 and/or the method 100.

In 410 it is determined that a reconfiguration of a mapping between GDIDs and LDIDs is necessary or desirable. This may be due to that a new device enters the cell (or registers its D2D capability), that a device leaves the cell (or deregisters its D2D capability), that traffic conditions in the cell have changed, etc. For example, a reconfiguration may be desirable to keep the signal distance between allocated beacons as large as possible.

The network node (or any other suitable part of the network) re-maps the active GDID(s) to LDID(s) in 430.

The new mapping is stored in the network node (or any other suitable part of the network) as shown by 440, and the old mapping is discarded as shown in 450. Obviously, 440 and 450 may comprise only updating the parts of the stored mapping that have changed.

Information indicative of at least the updated LDIDs are transmitted (in a similar way as described in connection to Figure 3) to the relevant devices as shown by 460.

Typically, the LDID (as described in connection to either of Figure 2, 3 and 4) associated with a device may be used by the same device to generate information for beacon transmission and by other devices to generate information for beacon scanning. The generation may for example, be via a look-up table and/or via running one or more shift registers with the LDID as initial value.

By using the very short representation of the LDID, beacon information may be very efficiently communicated to both master and slave devices and efficient peer discovery is facilitated.

By providing for allocation and re-allocation a dynamic allocation approach is achieved, where the network may allocate beacon resources (e.g. LDID) based on current conditions (e.g. current number of D2D devices in the cell, the current cell load, etc.). This provides for more efficient beacon signaling and also for more efficient and dynamic partition of cellular versus D2D communication in the cell.

Embodiments provide better utilization of the spectrum for network assisted D2D communication. For example, the beacon reports enable the network node to make informed decisions regarding which communication approach to use. Embodiments also provide for a reduction of the search space for a device in the peer-discovery procedure (e.g. by using mapping of GDID to LDID and/or by informing a device of beacon particulars of other relevant devices). This in turn reduces the power consumption for a device.

In some embodiments (e.g. for multi-operator deployment), the concept of LDIDs specific for a cell may be further developed. In such scenarios, the LDID may be complemented by an Operator Identity (OPID), where the OPID for instance might be one byte. The GDIDs may in such scenarios be mapped to OPIDs and LDIDs. An OPID is typically unique for an operator (at least within a specific geographical region). Typically, different operators in the same region may coordinate their respective mapping such that a device which is in the coverage area of two or more operators will obtain the same LDID from all operators, but different OPID.

It should be noted that the examples herein mainly refer to the situation when a single network node is involved in the network assisted device-to-device communication. It is noted that this network node may be any suitable network node, e.g. a base station or (e) NodeB, a network controller node, a relay node, etc. A network node may be in control of beacon (and/or other D2D) resources relating to one or several base stations. For example, a network controller may allocate beacon resources to devices operating under different base stations.

In some embodiments, a first network node is in control of a first set of beacon resources and a second network node is in control of a second set of beacon resources. The firs and second sets may coincide, may be overlapping or may be non-overlapping. The first network node may acquire information regarding allocated beacon resources in the second network node. Such information may be shared with devices under control by the first network node. If it is detected that a first device under control by the first network node and a second device under control by the second network node may set up a D2D connection, there can either be a change of node (e.g. cell change) for one of the devices or the D2D connection can be assisted by one of the network nodes using the other network node as a relay when required.

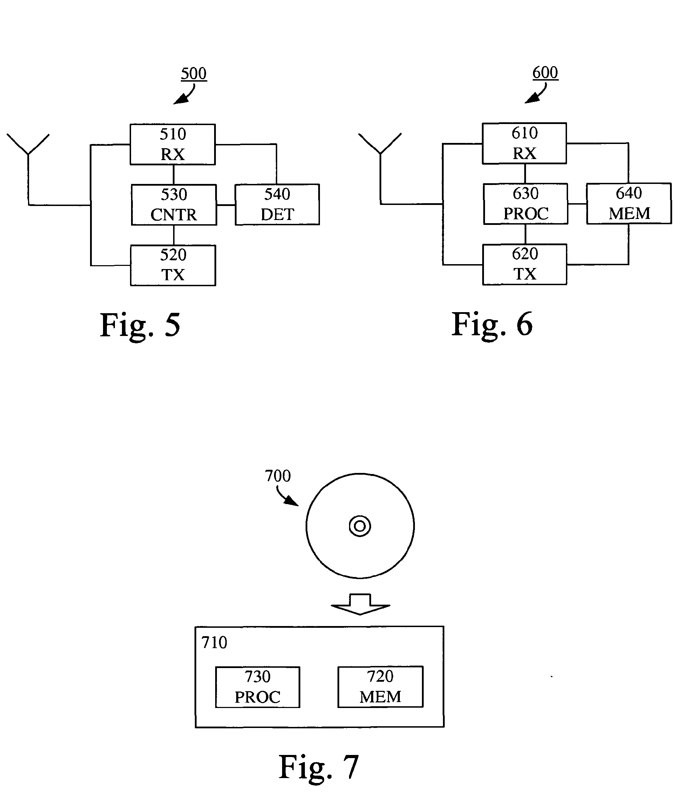

Figure 5 is a block diagram illustrating an example arrangement 500 according to some embodiments. The example arrangement may be comprised in a device (e.g. one of the devices 10 and 20 of Figure 1a and/or the device 201 of Figure 2).

The arrangement comprises a receiver 510, a transmitter 520, a controller 530 and a detector 540, and may be adapted to perform e.g. the method 200 of Figure 2. The transmitter is adapted to transmit a D2D capability indication, possibly as part of a registration request message. The receiver may be adapted to receive a registration acknowledgement message in response to a registration request message.

The transmitter may also be adapted to transmit a beacon request message, and the receiver is adapted to receive beacon information relating to the device itself and/or to other devices.

The controller is adapted to monitor beacon signaling of other devices in accordance with the received information. For example, the controller may be adapted to cause the receiver to listen in accordance with the received information. The detector is adapted to detect a beacon signal if present in the monitored signaling. The controller may also be adapted to cause the transmitter to transmit a beacon signal according to the received information.

The transmitter is adapted to transmit beacon measurement reports in accordance with the result of the monitoring of beacon signaling. The transmitter, receiver and controller are adapted to set up a D2D connection and to communicate according to a D2D protocol.

It is noted that the transmitter and receiver may be comprised in a single entity (a transceiver), and that the controller and the detector may be comprised in a single entity. It is also noted that the transmitter and/or receiver may comprise several different transmitters/receivers, e.g. a D2D transmitter/receiver pair and a cellular transmitter/receiver pair.

Figure 6 is a block diagram illustrating an example arrangement 600 according to some embodiments. The example arrangement may be comprised in a network node (e.g. 40 of Figure 1a and/or 101 of Figure 2).

The arrangement comprises a receiver 610, a transmitter 620, a processor 630 and a memory 640 (which may or may not be comprised in the same device as the other parts of the arrangement), and may be adapted to perform e.g. the method 100 of Figure 2 and/or any or both of the methods 300 and 400 of Figure 3 and 4 respectively.

The receiver is adapted to transmit a D2D capability indication, possibly as part of a registration request message and possibly comprising one or more GDIDs. The transmitter may be adapted to transmit a registration acknowledgement message in response to a registration request message.

The processor is adapted to allocate and re-allocate beacon resources. This may include mapping GDIDs to LDIDs and storing the mapping in the memory 640 adapted for this purpose.

The receiver may also be adapted to receive a beacon request message, and the transmitter is adapted to transmit information relating to the allocation of beacon resources.

The receiver may be adapted to receive beacon measurement reports, and the processor may be adapted to use the reports to assist in setup of a connection between two devices as has been described in connection to Figure 2.

It is noted that the transmitter and receiver may be comprised in a single entity (a transceiver).

The described embodiments of the invention and their equivalents may be realized in software or hardware or a combination thereof. They may be performed by general-purpose circuits associated with or integral to a communication device, such as digital signal processors (DSP), central processing units (CPU), co-processor units, field-programmable gate arrays (FPGA) or other programmable hardware, or by specialized circuits such as for example application-specific integrated circuits (ASIC). All such forms are contemplated to be within the scope of the invention.

The invention may be embodied within an electronic apparatus (e.g. a wireless communication device) comprising circuitry/logic or performing methods according to any of the embodiments of the invention. The electronic apparatus may, for example, be a portable or handheld mobile radio communication equipment, a mobile radio terminal, a mobile telephone, a base station, a communicator, an electronic organizer, a smartphone, a computer, a notebook or a mobile gaming device.

According to some embodiments of the invention, a computer program product comprises a computer readable medium such as, for example, a diskette or a CD-ROM as illustrated by 700 of Figure 7. The computer readable medium 700 may have stored thereon a computer program comprising program instructions. The computer program may be loadable into a data-processing unit 730, which may, for example, be comprised in a mobile terminal or network node 710. When loaded into the data-processing unit 730, the computer program may be stored in a memory 720 associated with or integral to the data-processing unit 730. According to some embodiments, the computer program may, when loaded into and run by the data-processing unit, cause the data-processing unit to execute method steps according to, for example, the methods shown in any of the Figures 2, 3 and/or 4.

The invention has been described herein with reference to various embodiments. However, a person skilled in the art would recognize numerous variations to the described embodiments that would still fall within the scope of the invention. For example, the method embodiments described herein describes example methods through method steps being performed in a certain order. However, it is recognized that these sequences of events may take place in another order without departing from the scope of the invention. Furthermore, some method steps may be performed in parallel even though they have been described as being performed in sequence.

In the same manner, it should be noted that in the description of embodiments of the invention, the partition of functional blocks into particular units is by no means limiting to the invention. Contrarily, these partitions are merely examples. Functional blocks described herein as one unit may be split into two or more units. In the same manner, functional blocks that are described herein as being implemented as two or more units may be implemented as a single unit without departing from the scope of the invention.

Hence, it should be understood that the limitations of the described embodiments are merely for illustrative purpose and by no means limiting. Instead, the scope of the invention is defmed by the appended claims rather than by the description, and all variations that fall within the range of the claims are intended to be embraced therein.

## Claims

1. A method of a first wireless communication device adapted to perform device-to-device communication, the method comprising:
transmitting (220) an indication of device-to-device communication capability to a network node adapted to provide assistance of device-to-device communication;
receiving (240), from the network node, one or more beacon parameters allocated to one or more second wireless communication devices adapted to perform device-to-device communication;
monitoring (250) device-to-device communication beacon signaling based on the received one or more beacon parameters of the one or more second wireless communication devices; and
performing at least one radio operation task based on measurements of the monitored device-to-device communication beacon signaling, wherein performing the at least one radio operation task comprises using the measurements of the monitored device-to-device communication beacon signaling to perform at least one of:
selecting one of the one or more second wireless communication devices for device-to-device communication; and
re-selecting one of the one or more second wireless communication devices for device-to-device communication.

2. The method of claim 1 wherein performing the at least one radio operation task further comprises:
transmitting (260) a beacon measurement report to the network node based on the monitored device-to-device communication beacon signaling.

3. The method of any of claims 1 to 2 wherein transmitting the indication of device-to-device communication capability is comprised in a registration procedure (115) of the first wireless communication device to the network node.

4. The method of any of claims 1 to 3 wherein the one or more beacon parameters of the one or more second wireless communication device comprise at least one of:
a local device identity; and
a beacon reception pattern.

5. The method of any of claims 1 to 4, further comprising detecting (255) a beacon signal associated with at least one of the one or more second wireless communication devices.

6. The method of any of claims 1 to 5, further comprising:
receiving (235) one or more beacon parameters of the first wireless communication device; and
transmitting (245) a beacon signal based on the received one or more beacon parameters associated with the first wireless communication device.

7. The method of claim 6 wherein the one or more beacon parameters associated with the first wireless communication device comprise at least one of:
a local device identity;
a beacon signature;
a beacon transmission power; and
a beacon transmission pattern.

8. The method of any of claims 1 to 7, further comprising:
transmitting (230) a beacon configuration request to the network node and receiving the one or more beacon parameters is in response thereto.

9. The method of any of claims 1 to 8 further comprising:
receiving (240), from the network node, one or more beacon parameters allocated by a neighboring network node to one or more third wireless communication devices adapted to perform device-to-device communication;
monitoring (250) device-to-device communication beacon signaling based on the received one or more beacon parameters of the one or more third wireless communication devices; and
wherein the beacon measurement report to the network node comprises a cell identity indication.

10. A method of a network node adapted to provide assistance of device-to-device communication, the method comprising:
allocating (110, 125) beacon resources to one or more second wireless communication devices adapted to perform device-to-device communication;
receiving (120), from a first wireless communication device adapted to perform device-to-device communication, an indication of device-to-device communication capability;
transmitting (140), to the first wireless communication device, one or more beacon parameters related to the allocated beacon resources of the one or more second wireless communication device, wherein the beacon parameters are for:
monitoring, by the first wireless communication device, device-to-device communication beacon signaling based on the transmitted one or more beacon parameters; and
performing, by the wireless communication device, at least one radio operation task based on measurements of the monitored device-to-device communication beacon signaling, wherein performing the at least one radio operation task comprises using the measurements of the monitored device-to-device communication beacon signaling to perform at least on of:
selecting one of the one or more second wireless communication devices for device-to-device communication; and
re-selecting one of the one or more second wireless communication devices for device-to-device communication; and
receiving (160), from the first wireless communication device, a beacon measurement report related to at least one of the one or more second wireless communication devices.

11. The method of claim 10 further comprising assisting (165, 170, 175) connection setup between the first wireless communication device and one of the one or more second wireless communication device based on the beacon measurement report.

12. The method of any of claims 10 to 11 further comprising detecting that a location change has occurred for one of the second wireless communication devices, and wherein the allocation of beacon resources comprises allocating beacon transmission resources to only the second wireless device for which the location change has occurred.

13. The method of any of claims 10 to 12, wherein allocating beacon resources to one or more second wireless communication devices comprises receiving, from one or more neighboring network nodes, one or more beacon parameters allocated by the respective neighboring network node to at least one of the one or more second wireless communication devices, and wherein the received beacon measurement report comprises a cell identity indication.

14. The method of claim 13 further comprising one or more of:
performing a cell change for the first wireless communication device based on the beacon measurement report; and
requesting, from a neighboring network node, a cell change to the network node for one of the second wireless communication devices based on the beacon measurement report.

15. The method of any of claims 10 to 14 further comprising transmitting the received beacon measurement report to at least one of the one or more second wireless communication devices.

16. A computer program product comprising a computer readable medium (700), having thereon a computer program comprising program instructions, the computer program being loadable into a data-processing unit (730) and adapted to cause execution of the method according to any of claims 1 through 15 when the computer program is run by the data-processing unit (730).

17. An arrangement of a first wireless communication device adapted to perform device-to-device communication, the arrangement comprising:
a transmitter (520) adapted to transmit an indication of device-to-device communication capability to a network node adapted to provide assistance of device-to-device communication;
a receiver (510) adapted to receive, from the network node, one or more beacon parameters allocated to one or more second wireless communication devices adapted to perform device-to-device communication; and
a controller (530) adapted to:
cause the receiver to monitor device-to-device communication beacon signaling based on the received one or more beacon parameters of the one or more second wireless communication devices; and
cause at least one of the transmitter and receiver to perform at least one radio operation task based on measurements of the monitored device-to-device communication beacon signaling, wherein the at least one radio operation task comprises using the measurements of the monitored device-to-device communication beacon signaling to perform at least one of:
selecting one of the one or more second wireless communication devices for device-to-device communication; and
re-selecting one of the one or more second wireless communication devices for device-to-device communication.

18. The arrangement of claim 17 wherein the at least one radio operation task further comprises:
transmitting a beacon measurement report to the network node based on the monitored device-to-device communication beacon signaling.

19. The arrangement of any of claims 17 to 18, further comprising a detector (540) adapted to detect a beacon signal associated with at least one of the one or more second wireless communication devices.

20. The arrangement of any of claims 17 to 19 wherein the receiver (510) is further adapted to receive one or more beacon parameters of the first wireless communication device, and the transmitter (520) is further adapted to transmit a beacon signal based on the received one or more beacon parameters associated with the first wireless communication device.

21. The arrangement of any of claims 17 to 20 wherein the transmitter (520) is further adapted to transmit a beacon configuration request to the network node.

22. The arrangement of any of claims 17 to 21 wherein:
the receiver is further adapted to receive, from the network node, one or more beacon parameters allocated by a neighboring network node to one or more third wireless communication devices adapted to perform device-to-device communication;
the controller is further adapted to cause the receiver to monitor device-to-device communication beacon signaling based on the received one or more beacon parameters of the one or more third wireless communication devices; and
wherein the beacon measurement report to the network node comprises a cell identity indication.

23. A wireless communication device adapted to perform device-to-device communication and comprising the arrangement of any of claims 17 to 22.

24. An arrangement of a network node adapted to provide assistance of device-to-device communication, the arrangement comprising:
a processor (630) adapted to allocate beacon resources to one or more second wireless communication devices adapted to perform device-to-device communication;
a receiver (610) adapted to receive, from a first wireless communication device adapted to perform device-to-device communication, an indication of device-to-device communication capability; and
a transmitter (620) adapted to transmit, to the first wireless communication device, one or more beacon parameters related to the allocated beacon resources of the one or more second wireless communication device, wherein the beacon parameters are for:
monitoring, by the first wireless communication device device-to-device communication beacon signaling based on the transmitted one or more beacon parameters; and
performing, by the wireless communication device at least one radio operation task based on measurements of the monitored device-to-device communication beacon signaling, wherein performing the at least one radio operation task comprises using the measurements of the monitored device-to-device communication beacon signaling to perform at least on of:
selecting one of the one or more second wireless communication devices for device-to-device communication; and
re-selecting one of the one or more second wireless communication devices for device-to-device communication;
wherein the receiver (610) is further adapted to receive, from the first wireless communication device, a beacon measurement report related to at least one of the one or more second wireless communication devices.

25. The arrangement of claim 24 wherein the processor is further adapted to detect that a location change has occurred for one of the second wireless communication devices, and to allocate beacon transmission resources to only the second wireless device for which the location change has occurred.

26. The arrangement of any of claims 24 to 25 wherein the transmitter is further adapted to transmit the received beacon measurement report to at least one of the one or more second wireless communication devices.

27. A network node adapted to provide assistance of device-to-device communication and comprising the arrangement of any of claims 24 to 26.

## Patentansprüche

1. Verfahren einer ersten drahtlosen Kommunikationsvorrichtung, die eingerichtet ist, um eine Vorrichtung-zu-Vorrichtungskommunikation durchzuführen, wobei das Verfahren umfasst:
Senden (220) einer Angabe einer Vorrichtung-zu-Vorrichtungskommunikationsfähigkeit zu einem Netzwerkknoten, der eingerichtet ist, um Hilfestellung bei der Vorrichtung-zu-Vorrichtungskommunikation zu leisten;
Empfangen (240), von den Netzwerkknoten, von einem oder mehreren Signalfeuerparametern, der oder die einer oder mehreren zweiten drahtlosen Kommunikationsvorrichtungen zugewiesen sind, die eingerichtet ist oder sind, um Vorrichtung-zu-Vorrichtungskommunikation durchzuführen;
Überwachen (250) einer Vorrichtung-zu-Vorrichtungskommunikations-Signalfeuersignalisierung auf der Grundlage des empfangenen einen oder der empfangenen mehreren Signalfeuerparameter der einen oder mehreren zweiten drahtlosen Kommunikationsvorrichtungen; und
Durchführen von zumindest einer Funkbetriebaufgabe auf der Grundlage von Messungen der überwachten Vorrichtung-zu-Vorrichtungskommunikations-Signalfeuersignalisierung, wobei das Durchführen der zumindest einen Funkbetriebaufgabe ein Verwenden der Messungen der überwachten Vorrichtung-zu-Vorrichtungskommunikations-Signalfeuersignalisierung umfasst, um zumindest eines durchzuführen aus:
Auswählen von einer der einen oder der mehreren zweiten drahtlosen Kommunikationsvorrichtungen für die Vorrichtung-zu-Vorrichtungskommunikation; und
Neuauswählen einer der einen oder mehreren zweiten drahtlosen Kommunikationsvorrichtungen für die Vorrichtung-zu-Vorrichtungskommunikation.

2. Verfahren gemäß Anspruch 1, wobei das Durchführen der zumindest einen Funkbetriebaufgabe weiter umfasst:
Senden (260) eines Signalfeuermessberichtes zu dem Netzwerkknoten auf der Grundlage der überwachten Vorrichtung-zu-Vorrichtungskommunikations-Signalfeuersignalisierung.

3. Verfahren gemäß einem der Ansprüche 1 bis 2, wobei das Senden der Angabe der Vorrichtung-zu-Vorrichtungskommunikationsfähigkeit in einem Registrierungsvorgang (115) der ersten drahtlosen Kommunikationsvorrichtung bei dem Netzwerkknoten umfasst ist.

4. Verfahren gemäß einem der Ansprüche 1 bis 3, wobei der eine oder die mehreren Signalfeuerparameter der einen oder mehreren zweiten drahtlosen Kommunikationsvorrichtungen zumindest eines umfasst aus:
einer lokalen Vorrichtungsidentität; und
einem Signalfeuerwiederholungsmuster.

5. Verfahren gemäß einem der Ansprüche 1 bis 4, weiterhin umfassend Erfassen (255) eines Signalfeuersignals, das mit zumindest einer der einen oder der mehreren zweiten drahtlosen Kommunikationsvorrichtungen verknüpft ist.

6. Verfahren gemäß einem der Ansprüche 1 bis 5, weiterhin umfassend:
Empfangen (235) von einem oder mehreren Signalfeuerparametern der ersten drahtlosen Kommunikationsvorrichtung; und
Senden (245) eines Signalfeuersignals auf der Grundlage des empfangenen einen oder der empfangenen mehreren Signalfeuerparameter, der oder die mit der ersten drahtlosen Kommunikationsvorrichtung verknüpft ist oder sind.

7. Verfahren gemäß Anspruch 6, wobei der eine oder die mehreren Signalfeuerparameter, der oder die mit der ersten drahtlosen Kommunikationsvorrichtung verknüpft ist oder sind, zumindest eines umfassen aus:
einer lokalen Vorrichtungsidentität;
einer Signalfeuersignatur;
einer Signalfeuersendeleistung; und
einem Signalfeuersendemuster.

8. Verfahren gemäß einem der Ansprüche 1 bis 7, weiterhin umfassend:
Senden (230) einer Signalfeuerkonfigurationsanforderung zu dem Netzwerkknoten und Empfangen des einen oder der mehreren Signalfeuerparameter als eine Antwort darauf.

9. Verfahren gemäß einem der Ansprüche 1 bis 8, weiterhin umfassend:
Empfangen (240), von den Netzwerkknoten, von einem oder mehreren Signalfeuerparametern, der oder die durch einen benachbarten Netzwerkknoten einer oder mehreren dritten drahtlosen Kommunikationsvorrichtungen zugewiesen ist oder sind, die eingerichtet ist oder sind, um die Vorrichtung-zu-Vorrichtungskommunikation durchzuführen;
Überwachen (250) der Vorrichtung-zu-Vorrichtungskommunikations-Signalfeuersignalisierung auf der Grundlage des empfangenen einen oder der empfangenen mehreren Signalfeuerparameter der einen oder mehreren dritten drahtlosen Kommunikationsvorrichtungen; und
wobei der Signalfeuermessbericht zu dem Netzwerkknoten eine Zellidentitätsangabe umfasst.

10. Verfahren eines Netzwerkknotens, der eingerichtet ist, um Hilfestellung bei einer Vorrichtung-zu-Vorrichtungskommunikation zu leisten, wobei das Verfahren umfasst:
Zuweisen (110, 125) von Signalfeuerressourcen zu einer oder mehreren zweiten drahtlosen Kommunikationsvorrichtungen, die eingerichtet ist oder sind, um die Vorrichtung-zu-Vorrichtungskommunikation durchzuführen;
Empfangen (120), von einer ersten drahtlosen Kommunikationsvorrichtung, die eingerichtet ist, um die Vorrichtung-zu-Vorrichtungskommunikation durchzuführen, einer Angabe einer Vorrichtung-zu-Vorrichtungskommunikationsfähigkeit;
Senden (140), zu der ersten drahtlosen Kommunikationsvorrichtung, von einem oder mehreren Signalfeuerparametern, der oder die auf die zugewiesenen Signalfeuerressourcen der einen oder mehreren zweiten drahtlosen Kommunikationsvorrichtungen bezogen ist oder sind, wobei die Signalfeuerparameter dienen zum:
Überwachen, durch die erste drahtlose Kommunikationsvorrichtung, einer Vorrichtung-zu-Vorrichtunskommunikations-Signalfeuersignalisierung auf der Grundlage des gesendeten einen oder der gesendeten mehreren Signalfeuerparameter; und
Durchführen, durch die drahtlose Kommunikationsvorrichtung, zumindest einer Funkbetriebaufgabe auf der Grundlage von Messungen der überwachten Vorrichtung-zu-Vorrichtungskommunikations-Signalfeuersignalisierung, wobei das Durchführen der zumindest einen Funkbetriebaufgabe das Verwenden der Messungen der überwachten Vorrichtung-zu-Vorrichtungskommunikations-Signalfeuersignalisierung umfasst, um zumindest eines durchzuführen aus:
Auswählen von einer der einen oder mehreren zweiten drahtlosen Kommunikationsvorrichtungen für die Vorrichtung-zu-Vorrichtungskommunikation; und
Neuauswählen von einer der einen oder mehreren zweiten drahtlosen Kommunikationsvorrichtungen für die Vorrichtung-zu-Vorrichtungskommunikation; und
Empfangen (160), von der ersten drahtlosen Kommunikationsvorrichtung, eines Signalfeuermessberichtes, der auf eine der einen oder mehreren zweiten drahtlosen Kommunikationsvorrichtungen bezogen ist.

11. Verfahren gemäß Anspruch 10, weiterhin umfassend Hilfestellungleisten (165, 170, 175) bei einem Verbindungsaufbau zwischen der ersten drahtlosen Kommunikationsvorrichtung und einer der einen oder mehreren zweiten drahtlosen Kommunikationsvorrichtungen auf der Grundlage des Signalfeuermessberichtes.

12. Verfahren gemäß einem der Ansprüche 10 bis 11, weiterhin umfassend Erfassen, dass ein Ortwechsel für eine der zweiten drahtlosen Kommunikationsvorrichtungen auftrat, und wobei das Zuweisen der Signalfeuerressourcen ein Zuweisen von Signalfeuersenderessourcen lediglich zu der zweiten drahtlosen Vorrichtung umfasst, für die der Ortswechsel auftrat.

13. Verfahren gemäß einem der Ansprüche 10 bis 12, wobei das Zuweisen von Signalfeuerressourcen zu einer oder mehreren zweiten drahtlosen Kommunikationsvorrichtungen ein Empfangen, von einem oder mehreren benachbarten Netzwerkknoten, von einem oder mehreren Signalfeuerparametern umfasst, der oder die durch den jeweiligen benachbarten Knoten zumindest einer der einen oder mehreren drahtlosen Kommunikationsvorrichtungen zugewiesen ist oder sind, und wobei der empfangene Signalfeuermessbericht eine Zellidentitätsangabe umfasst.

14. Verfahren gemäß Anspruch 13, weiterhin umfassend eines oder mehrere von:
Durchführen eines Zellwechsels für die erste drahtlose Kommunikationsvorrichtung auf der Grundlage des Signalfeuermessberichtes; und
Anfordern, von einem benachbarten Netzwerkknoten, eines Zellwechsels zu dem Netzwerkknoten für eine der zweiten drahtlosen Kommunikationsvorrichtungen auf der Grundlage des Signalfeuermessberichtes.

15. Verfahren gemäß einem der Ansprüche 10 bis 14, weiterhin umfassend Senden des empfangenen Signalfeuermessberichtes zu zumindest einer der einen oder mehreren zweiten drahtlosen Kommunikationsvorrichtungen.

16. Computerprogrammprodukt, umfassend ein computerlesbares Medium (700), das ein Computerprogramm darauf aufweist, das Programmanweisungen umfasst, wobei das Computerprogram in eine Datenverarbeitungseinheit (730) ladbar ist und eingerichtet ist, um die Ausführung des Verfahrens gemäß zumindest einem der Ansprüche 1 bis 15 zu veranlassen, wenn das Computerprogramm durch die Datenverarbeitungseinheit (730) abläuft.

17. Anordnung einer ersten drahtlosen Kommunikationsvorrichtung, die eingerichtet ist, um eine Vorrichtung-zu-Vorrichtungskommunikation durchzuführen, wobei die Anordnung umfasst:
einen Sender (520), der eingerichtet ist, um eine Angabe einer Vorrichtung-zu-Vorrichtungskommunikationsfähigkeit zu einem Netzwerkknoten zu senden, der eingerichtet ist, um Hilfestellung bei der Vorrichtung-zu-Vorrichtungskommunikation zu leisten;
einen Empfänger (510), der eingerichtet ist, um von dem Netzwerkknoten einen oder mehrere Signalfeuerparameter zu empfangen, der oder die einer oder mehreren zweiten drahtlosen Kommunikationsvorrichtungen zugewiesen ist oder sind, die eingerichtet ist oder sind, um die Vorrichtung-zu-Vorrichtungskommunikation durchzuführen; und
eine Steuereinrichtung (530), die eingerichtet ist, um:
den Empfänger zu veranlassen, um die Vorrichtung-zu-Vorrichtungskommunikations-Signalfeuersignalisierung auf der Grundlage des empfangenen einen oder der empfangenen mehreren Signalfeuerparameter der einen oder mehreren zweiten drahtlosen Kommunikationsvorrichtungen zu überwachen; und
den Sender und/oder den Empfänger zu veranlassen, um zumindest eine Funkbetriebaufgabe auf der Grundlage von Messungen der überwachten Vorrichtung-zu-Vorrichtungskommunikations-Signalfeuersignalisierung durchzuführen, wobei die zumindest eine Funkbetriebaufgabe das Verwenden der Messungen der überwachten Vorrichtung-zu-Vorrichtungskommunikations-Signalfeuersignalisierung umfasst, um zumindest eines durchzuführen aus:
Auswählen von einer der einen oder mehreren zweiten drahtlosen Kommunikationsvorrichtungen für die Vorrichtung-zu-Vorrichtungskommunikation; und
Neuauswählen von einer der einen oder mehreren zweiten drahtlosen Kommunikationsvorrichtungen für die Vorrichtung-zu-Vorrichtungskommunikation.

18. Anordnung gemäß Anspruch 17, wobei die zumindest eine Funkbetriebaufgabe weiterhin umfasst:
Senden eines Signalfeuermessberichtes zu dem Netzwerkknoten auf der Grundlage der überwachten Vorrichtung-zu-Vorrichtungskommunikations-Signalfeuersignalisierung.

19. Anordnung gemäß einem der Ansprüche 17 bis 18, weiterhin umfassend eine Erfassungseinrichtung (540), die eingerichtet ist, um ein Signalfeuersignal zu erfassen, das mit zumindest einer der einen oder mehreren zweiten drahtlosen Kommunikationsvorrichtungen verknüpft ist.

20. Anordnung gemäß einem der Ansprüche 17 bis 19, wobei der Empfänger (510) weiterhin eingerichtet ist, um einen oder mehrere Signalfeuerparameter der ersten drahtlosen Kommunikationsvorrichtung zu empfangen, und der Sender (520) weiterhin eingerichtet ist, um ein Signalfeuersignal auf der Grundlage des empfangenen einen oder der empfangenen mehreren Signalfeuerparameter zu senden, der oder die mit der ersten drahtlosen Kommunikationsvorrichtung verknüpft ist oder sind.

21. Anordnung gemäß einem der Ansprüche 17 bis 20, wobei der Sender (520) weiterhin eingerichtet ist, um eine Signalvorrichtungskonfigurationsanforderung zu dem Netzwerkknoten zu senden.

22. Anordnung gemäß einem der Ansprüche 17 bis 21, wobei:
der Empfänger weiterhin eingerichtet ist, um von dem Netzwerkknoten einen oder mehrere Signalfeuerparameter zu empfangen, der oder die durch einen benachbarten Netzwerkknoten einer oder mehreren dritten drahtlosen Kommunikationsvorrichtungen zugewiesen ist oder sind, die eingerichtet ist oder sind, um die Vorrichtung-zu-Vorrichtungskommunikation durchzuführen;
die Steuereinrichtung weiterhin eingerichtet ist, um den Empfänger zu veranlassen, um die Vorrichtung-zu-Vorrichtungskommunikations-Signalfeuersignalisierung auf der Grundlage des empfangenen einen oder der empfangenen mehreren Signalfeuerparameter der einen oder mehreren dritten drahtlosen Kommunikationsvorrichtungen zu überwachen; und
wobei der Signalfeuermessbericht an den Netzwerkknoten eine Zellidentitätsangabe umfasst.

23. Drahtlose Kommunikationsvorrichtung, die eingerichtet ist, um die Vorrichtung-zu-Vorrichtungskommunikation durchzuführen und die die Anordnung gemäß einem der Ansprüche 17 bis 22 umfasst.

24. Anordnung eines Netzwerkknotens, der eingerichtet ist, um Hilfestellung bei einer Vorrichtung-zu-Vorrichtungskommunikation zu leisten, wobei die Anordnung umfasst:
einen Prozessor (630), der eingerichtet ist, um Signalfeuerressourcen einer oder mehreren zweiten drahtlosen Kommunikationsvorrichtungen zuzuweisen, die eingerichtet ist oder sind, um die Vorrichtung-zu-Vorrichtungskommunikation durchzuführen;
einen Empfänger (610), der eingerichtet ist, um von einer ersten drahtlosen Kommunikationsvorrichtung, die eingerichtet ist, um die Vorrichtung-zu-Vorrichtungskommunikation durchzuführen, eine Angabe einer Vorrichtung-zu-Vorrichtungskommunikationsfähigkeit zu empfangen; und
einen Sender (620), der eingerichtet ist, um zu der ersten drahtlosen Kommunikationsvorrichtung einen oder mehrere Signalfeuerparameter zu senden, der oder die auf die zugewiesenen Signalfeuerressourcen der einen oder mehreren zweiten drahtlosen Kommunikationsvorrichtungen bezogen ist oder sind, wobei die Signalfeuerparameter dienen zum:
Überwachen, durch die erste drahtlose Kommunikationsvorrichtung, der Vorrichtung-zu-Vorrichtungskommunikations-Signalfeuersignalisierung auf der Grundlage des gesendeten einen oder der gesendeten mehreren Signalfeuerparameter; und
Durchführen, durch die drahtlose Kommunikationsvorrichtung, von zumindest einer Funkbetriebaufgabe auf der Grundlage von Messungen der überwachten Vorrichtung-zu-Vorrichtungskommunikations-Signalfeuersignalisierung, wobei das Durchführen der zumindest einen Funkbetriebaufgabe ein Verwenden der Messungen der überwachten Vorrichtung-zu-Vorrichtungskommunikations-Signalfeuersignalisierung umfasst, um zumindest eines durchzuführen aus:
Auswählen von einer der einen oder mehreren zweiten drahtlosen Kommunikationsvorrichtungen für die Vorrichtung-zu-Vorrichtungskommunikation; und
Neuauswählen von einer der einen oder mehreren zweiten drahtlosen Kommunikationsvorrichtungen für die Vorrichtung-zu-Vorrichtungskommunikation;
wobei der Empfänger (610) weiterhin eingerichtet ist, um von der ersten drahtlosen Kommunikationsvorrichtung einen Signalfeuermessbericht zu empfangen, der auf zumindest eine der einen oder mehreren zweiten drahtlosen Kommunikationsvorrichtungen bezogen ist.

25. Anordnung gemäß Anspruch 24, wobei der Prozessor weiterhin eingerichtet ist, um zu erfassen, dass ein Ortswechsel für eine der zweiten drahtlosen Kommunikationsvorrichtungen auftrat, und um Signalfeuersenderessourcen lediglich der zweiten drahtlosen Kommunikationsvorrichtung zuzuweisen, für die der Ortswechsel auftrat.

26. Anordnung gemäß einem der Ansprüche 24 bis 25, wobei der Sender weiterhin eingerichtet ist, um den empfangenen Signalfeuermessbericht zu zumindest einer der einen oder mehreren zweiten drahtlosen Kommunikationsvorrichtungen zu senden.

27. Netzwerkknoten, der eingerichtet ist, um eine Hilfestellung bei einer Vorrichtung-zu-Vorrichtungskommunikation zu leisten und der die Anordnung gemäß zumindest einem der Ansprüche 24 bis 26 umfasst.

## Revendications

1. Procédé exécuté par un premier dispositif de communication sans fil conçu pour effectuer une communication de dispositif à dispositif, le procédé comprenant les étapes consistant à :
émettre (220) une indication de capacité de communication de dispositif à dispositif vers un noeud de réseau conçu pour fournir une assistance à la communication de dispositif à dispositif ;
recevoir (240) du noeud de réseau un ou plusieurs paramètres de balises attribuées à un ou plusieurs deuxièmes dispositifs de communication sans fil conçus pour effectuer une communication de dispositif à dispositif ;
surveiller (250) la signalisation des balises de communication de dispositif à dispositif en fonction desdits un ou plusieurs paramètres de balises reçus pour lesdits un ou plusieurs deuxièmes dispositifs de communication sans fil ; et
effectuer au moins une tâche de fonctionnement radio en fonction des mesures de la signalisation des balises de communication de dispositif à dispositif qui sont surveillées, l'étape consistant à effectuer ladite au moins une tâche de fonctionnement radio comprenant l'étape consistant à utiliser les mesures de la signalisation des balises de communication de dispositif à dispositif qui sont surveillées pour effectuer l'une des opérations suivantes :
sélectionner un desdits un ou plusieurs deuxièmes dispositifs de communication sans fil pour une communication de dispositif à dispositif ; et
re-sélectionner un desdits un ou plusieurs deuxièmes dispositifs de communication sans fil pour une communication de dispositif à dispositif.

2. Procédé selon la revendication 1, dans lequel l'étape consistant à effectuer ladite au moins une tâche de fonctionnement radio comprend en outre l'étape consistant à :
émettre (260) un rapport de mesure de balises vers le noeud de réseau, en fonction de la signalisation des balises de communication de dispositif à dispositif qui sont surveillées.

3. Procédé selon l'une quelconque des revendications 1 et 2, dans lequel l'étape d'émission de l'indication de la capacité de communication de dispositif à dispositif est comprise dans une procédure d'enregistrement (115) du premier dispositif de communication sans fil auprès du noeud de réseau.

4. Procédé selon l'une quelconque des revendications 1 à 3, dans lequel lesdits un ou plusieurs paramètres de balises desdits un ou plusieurs deuxièmes dispositifs de communication sans fil comprennent au moins un des paramètres suivants :
une identité locale de dispositif ; et
un motif de réception de balises.

5. Procédé selon l'une quelconque des revendications 1 à 4, comprenant en outre l'étape consistant à détecter (255) un signal de balise associé à au moins un desdits un ou plusieurs deuxièmes dispositifs de communication sans fil.

6. Procédé selon l'une quelconque des revendications 1 à 5, comprenant en outre les étapes consistant à :
recevoir (235) un ou plusieurs paramètres de balises du premier dispositif de communication sans fil ; et
émettre (245) un signal de balise en fonction desdits un ou plusieurs paramètres de balises reçus qui sont associés au premier dispositif de communication sans fil.

7. Procédé selon la revendication 6, dans lequel lesdits un ou plusieurs paramètres de balises associés au premier dispositif de communication sans fil comprennent au moins un des paramètres suivants :
une identité locale de dispositif ;
une signature de balise ;
une puissance d'émission de balise ; et
un motif d'émission de balise.

8. Procédé selon l'une quelconque des revendications 1 à 7, comprenant en outre l'étape consistant à :
émettre (230) une demande de configuration de balises vers le noeud de réseau et recevoir lesdits un ou plusieurs paramètres de balises en réponse.

9. Procédé selon l'une quelconque des revendications 1 à 8, comprenant en outre les étapes consistant à :
recevoir (240) du noeud de réseau un ou plusieurs paramètres de balises attribués par un noeud de réseau adjacent à un ou plusieurs troisièmes dispositifs de communication sans fil conçus pour effectuer une communication de dispositif à dispositif ;
surveiller (250) la signalisation des balises de communication de dispositif à dispositif en fonction desdits un ou plusieurs paramètres de balises reçus d'un ou plusieurs troisièmes dispositifs de communication sans fil ; et
dans lequel le rapport de mesure de balises envoyé au noeud de réseau comprend une indication d'identité de cellule.

10. Procédé exécuté par un noeud de réseau conçu pour fournir une assistance à la communication de dispositif à dispositif, le procédé comprenant les étapes consistant à :
attribuer (110, 125) des ressources de balises à un ou plusieurs deuxièmes dispositifs de communication sans fil conçus pour effectuer une communication de dispositif à dispositif ;
recevoir (120) d'un premier dispositif de communication sans fil conçu pour effectuer une communication de dispositif à dispositif une indication d'une capacité de communication de dispositif à dispositif ;
émettre (140) vers le premier dispositif de communication sans fil un ou plusieurs paramètres de balises liés aux ressources de balises attribuées auxdits un ou plusieurs deuxièmes dispositifs de communication sans fil, les paramètres de balises étant destinés à :
surveiller par le premier dispositif de communication sans fil la signalisation de balises de communication de dispositif à dispositif, en fonction desdits un ou plusieurs paramètres de balises émis ; et
effectuer par le dispositif de communication sans fil au moins une tâche de fonctionnement radio en fonction de mesures de la signalisation de balises de communication de dispositif à dispositif qui sont surveillées, l'étape consistant à effectuer ladite au moins une tâche de fonctionnement radio comprenant l'utilisation des mesures de la signalisation des balises de communication de dispositif à dispositif qui sont surveillées pour effectuer l'une des opérations suivantes :
sélectionner un desdits un ou plusieurs deuxièmes dispositifs de communication sans fil pour une communication de dispositif à dispositif ; et
re-sélectionner un desdits un ou plusieurs deuxièmes dispositifs de communication sans fil pour une communication de dispositif à dispositif ; et
recevoir (160) du premier dispositif de communication sans fil un rapport de mesure de balises portant sur au moins un desdits un ou plusieurs deuxièmes dispositifs de communication sans fil.

11. Procédé selon la revendication 10, comprenant en outre l'étape consistant à fournir une assistance (165, 170, 175) à l'établissement de la connexion entre le premier dispositif de communication sans fil et un desdits un ou plusieurs deuxièmes dispositifs de communication sans fil, en fonction du rapport de mesure des balises.

12. Procédé selon l'une quelconque des revendications 10 et 11, comprenant en outre l'étape consistant à détecter qu'un changement de position s'est produit pour un des deuxièmes dispositifs de communication sans fil et dans lequel l'étape d'attribution des ressources de balises comprend l'étape consistant à attribuer des ressources d'émission de balises au seul deuxième dispositif de communication sans fil pour lequel le changement de position s'est produit.

13. Procédé selon l'une quelconque des revendications 10 à 12, dans lequel l'étape d'attribution de ressources de balises à un ou plusieurs deuxièmes dispositifs de communication sans fil comprend l'étape consistant à recevoir d'un ou plusieurs noeuds de réseau adjacents, un ou plusieurs paramètres de balises attribuées par le noeud de réseau adjacent respectif à au moins un desdits un ou plusieurs deuxièmes dispositifs de communication sans fil et dans lequel le rapport de mesure des balises reçu comprend une indication d'identité de cellule.

14. Procédé selon la revendication 13, comprenant en outre une ou plusieurs des étapes consistant à :
effectuer un changement de cellule pour le premier dispositif de communication sans fil, en fonction du rapport de mesure des balises ; et
demander à un noeud de réseau adjacent un changement de cellule à destination du noeud de réseau pour un des deuxièmes dispositifs de communication sans fil, en fonction du rapport de mesure des balises.

15. Procédé selon l'une quelconque des revendications 10 à 14, comprenant en outre l'étape consistant à émettre le rapport de mesure des balises reçu vers au moins un desdits un ou plusieurs deuxièmes dispositifs de communication sans fil.

16. Progiciel d'ordinateur comprenant un support lisible par ordinateur (700) qui porte un programme d'ordinateur comprenant des instructions de programme, le programme d'ordinateur pouvant être chargé dans une unité de traitement de données (730) et étant conçu pour commander l'exécution du procédé selon l'une quelconque des revendications 1 à 15 lorsque le programme d'ordinateur est exécuté par l'unité de traitement de données (730).

17. Agencement d'un premier dispositif de communication sans fil conçu pour effectuer une communication de dispositif à dispositif, l'agencement comprenant :
un émetteur (520) conçu pour émettre une indication de capacité de communication de dispositif à dispositif vers un noeud de réseau conçu pour fournir une assistance à la communication de dispositif à dispositif ;
un récepteur (510) conçu pour recevoir du noeud de réseau un ou plusieurs paramètres de balises attribuées à un ou plusieurs deuxièmes dispositifs de communication sans fil conçus pour effectuer une communication de dispositif à dispositif ; et
un contrôleur (530) conçu pour :
commander au récepteur de surveiller la signalisation des balises de communication de dispositif à dispositif en fonction desdits un ou plusieurs paramètres de balises reçus pour lesdits un ou plusieurs deuxièmes dispositifs de communication sans fil ; et
commander à au moins soit l'émetteur, soit le récepteur, d'effectuer au moins une tâche de fonctionnement radio en fonction des mesures de la signalisation des balises de communication de dispositif à dispositif qui sont surveillées, ladite au moins une tâche de fonctionnement radio comprenant l'utilisation des mesures de la signalisation des balises de communication de dispositif à dispositif qui sont surveillées pour effectuer l'une des opérations suivantes :
sélectionner un desdits un ou plusieurs deuxièmes dispositifs de communication sans fil pour une communication de dispositif à dispositif ; et
re-sélectionner un desdits un ou plusieurs deuxièmes dispositifs de communication sans fil pour une communication de dispositif à dispositif.

18. Agencement selon la revendication 17, dans lequel ladite au moins une tâche de fonctionnement radio consiste à :
émettre un rapport de mesure de balises vers le noeud de réseau, en fonction de la signalisation des balises de communication de dispositif à dispositif qui sont surveillées.

19. Agencement selon l'une quelconque des revendications 17 et 18, comprenant en outre un détecteur (540) conçu pour détecter un signal de balise associé à au moins un desdits un ou plusieurs deuxièmes dispositifs de communication sans fil.

20. Agencement selon l'une quelconque des revendications 17 à 19, dans lequel le récepteur (510) est en outre conçu pour recevoir un ou plusieurs paramètres de balises du premier dispositif de communication sans fil et l'émetteur (520) est en outre conçu pour émettre un signal de balise en fonction desdits un ou plusieurs paramètres de balises reçus qui sont associés au premier dispositif de communication sans fil.

21. Agencement selon l'une quelconque des revendications 17 à 20, dans lequel l'émetteur (520) est en outre conçu pour émettre une demande de configuration de balises vers le noeud de réseau.

22. Agencement selon l'une quelconque des revendications 17 à 21, dans lequel :
le récepteur est en outre conçu pour recevoir du noeud de réseau un ou plusieurs paramètres de balises attribuées par un noeud de réseau adjacent à un ou plusieurs troisièmes dispositifs de communication sans fil conçus pour effectuer une communication de dispositif à dispositif ;
le contrôleur est en outre conçu pour commander au récepteur de surveiller la signalisation de balises de communication de dispositif à dispositif en fonction desdits un ou plusieurs paramètres de balises reçus pour lesdits un ou plusieurs troisièmes dispositifs de communication sans fil ; et
dans lequel le rapport de mesure des balises envoyé au noeud de réseau comprend une indication d'identité de cellule.

23. Dispositif de communication sans fil conçu pour effectuer une communication de dispositif à dispositif et comprenant un agencement selon l'une quelconque des revendications 17 à 22.

24. Agencement d'un noeud de réseau conçu pour fournir une assistance à la communication de dispositif à dispositif, l'agencement comprenant :
un processeur (630) conçu pour attribuer des ressources de balises à un ou plusieurs deuxièmes dispositifs de communication sans fil conçus pour effectuer une communication de dispositif à dispositif ;
un récepteur (610) conçu pour recevoir d'un premier dispositif de communication sans fil conçu pour effectuer une communication de dispositif à dispositif, une indication d'une capacité de communication de dispositif à dispositif ; et
un émetteur (620) conçu pour émettre vers le premier dispositif de communication sans fil un ou plusieurs paramètres de balises liés aux ressources de balises attribuées auxdits un ou plusieurs deuxièmes dispositifs de communication sans fil, les paramètres de balises étant destinés à :
surveiller par le premier dispositif de communication sans fil la signalisation de balises de communication de dispositif à dispositif, en fonction desdits un ou plusieurs paramètres de balises émis ; et
effectuer par le dispositif de communication sans fil au moins une tâche de fonctionnement radio en fonction de mesures de la signalisation de balises de communication de dispositif à dispositif qui sont surveillées, l'étape consistant à effectuer ladite au moins une tâche de fonctionnement radio comprenant l'utilisation des mesures de la signalisation des balises de communication de dispositif à dispositif qui sont surveillées pour effectuer l'une des opérations suivantes :
sélectionner un desdits un ou plusieurs deuxièmes dispositifs de communication sans fil pour une communication de dispositif à dispositif ; et
re-sélectionner un desdits un ou plusieurs deuxièmes dispositifs de communication sans fil pour une communication de dispositif à dispositif ;
dans lequel le récepteur (610) est en outre conçu pour recevoir du premier dispositif de communication sans fil un rapport de mesure de balises portant sur au moins un desdits un ou plusieurs deuxièmes dispositifs de communication sans fil.

25. Agencement selon la revendication 24, dans lequel le processeur est en outre conçu pour détecter qu'un changement de position s'est produit pour un des deuxièmes dispositifs de communication sans fil et pour attribuer des ressources d'émission de balises au seul deuxième dispositif de communication sans fil pour lequel le changement de position s'est produit.

26. Agencement selon l'une quelconque des revendications 24 et 25, dans lequel l'émetteur est en outre conçu pour émettre le rapport de mesure de balises reçu vers au moins un desdits un ou plusieurs deuxièmes dispositifs de communication sans fil.

27. Noeud de réseau conçu pour fournir une assistance à la communication de dispositif à dispositif et comprenant l'agencement selon l'une quelconque des revendications 24 à 26.
